# EUROPEAN PATENT SPECIFICATION

(11) **EP 2 735 189 B1**
(45) Date of publication and mention of the grant of the patent: **27.05.2015**
(21) Application number: 12759511.4
(22) Date of filing: 23.07.2012
(51) Int. Cl.: H04W 76/06, H04W 80/06

(54) **SYSTEM AND METHOD FOR FLOW TERMINATION OF A TCP SESSION**
SYSTEM UND VERFAHREN ZUR FLUSSBEENDIGUNG EINER TCP-SITZUNG
SYSTÈME ET PROCÉDÉ DE FERMETURE DE FLUX D'UNE SESSION TCP

(30) Priority: 22.07.2011 US 201113188736
(43) Date of publication of application: 28.05.2014
(73) Proprietor: Telefonaktiebolaget L M Ericsson (publ), 164 83 Stockholm (SE)
(72) Inventor: ALBASHEIR, Suliman, Saint-Laurent, Quebec H4N 3M2 (CA); LeFRANCOIS, Claude, Laval, Québec H7Y 2G9 (CA)
(74) Representative: Röthinger, Rainer
(86) International application number: PCT/IB2012/053749
(87) International publication number: WO 2013/014603

(56) References cited:
- US-A1- 2003 235 206
- US-A1- 2006 056 307
- US-A1- 2009 252 072

## Description

### TECHNICAL FIELD

The present invention relates generally to procedures and mechanisms for mitigating the occurrence of a TCP signaling storm by terminating the flow of a TCP session when performing content enrichment in mobile networks.

### BACKGROUND

The General Packet Radio Service (GPRS) network architecture can be viewed as an evolution of the Global System for Mobile Communications (GSM) network carrying both circuit switched and packet data. With GPRS providing a move from circuit switched technology to packet switched technology, it was necessary to upgrade the network architecture to accommodate this. The main new network architecture entities that are added are the Gateway GPRS Support Node (GGSN) and the Serving GPRS Support Node (SGSN). In brief, the SGSN forms a gateway to the services within the network, while the GGSN acts as an interface and a router to external networks. The GGSN contains routing information for GPRS mobile devices, which is used to tunnel packets through the IP based internal backbone to the correct SGSN.

When a mobile device attaches to a SGSN and wants to begin transferring data, it must first activate a Packet Data Protocol (PDP) address. Activating a PDP address establishes an association between the mobile device's current SGSN and the GGSN that anchors the PDP address.

Direct tunnel is an enhanced functionality in 3G networks that enables operators to simplify their mobile packet data networks. Direct tunnel allows data traffic to be routed directly from the user equipment (UE) in the Radio Access Network (RAN) to the core network's Internet Gateway node (the GGSN), bypassing the control node (the SGSN) through which data traffic was routed in previous network architectures.

In a conventional arrangement, a Transmission Control Program (TCP) session is first established between a UE and a server to allow a Hypertext Transfer Protocol (HTTP) session, or a session using any other appropriate protocol, between the UE and server. The GGSN acts as a transparent gateway between the mobile network and the internet network. This allows the UE to make an HTTP request to the server to access, for example, an internet address.

In general, TCP provides reliable, ordered delivery of a stream of bytes from one application to another. TCP uses a sequence number to identify each segment of data. The sequence number identifies the order of the segments sent from each computer so that the data can be reconstructed in order, regardless of any fragmentation, disordering, or packet loss that may occur during transmission. TCP also uses a cumulative acknowledgment scheme, where the receiver sends an acknowledgment number which signifies that the receiver has received all data preceding the acknowledged sequence number. A TCP message consists of a header and a body section. The TCP header includes identifiers (such as source IP address, destination IP address, source port, destination port, protocol), the sequence and acknowledgement numbers, and other TCP header fields. The body section follows the header and contains the payload data carried for the application. The TCP body section may also contain a header for an application layer protocol. TCP packets are validated by a checksum. The checksum is included in each packet for the receiver to verify the integrity of the transmission.

Particular concepts concerning the use of GGSN in connection with a TCP session are described in US 2009/252072 A1. Moreover, a technique for modifying the header of a TCP message by a gateway is suggested in US 2003/235206 A1.

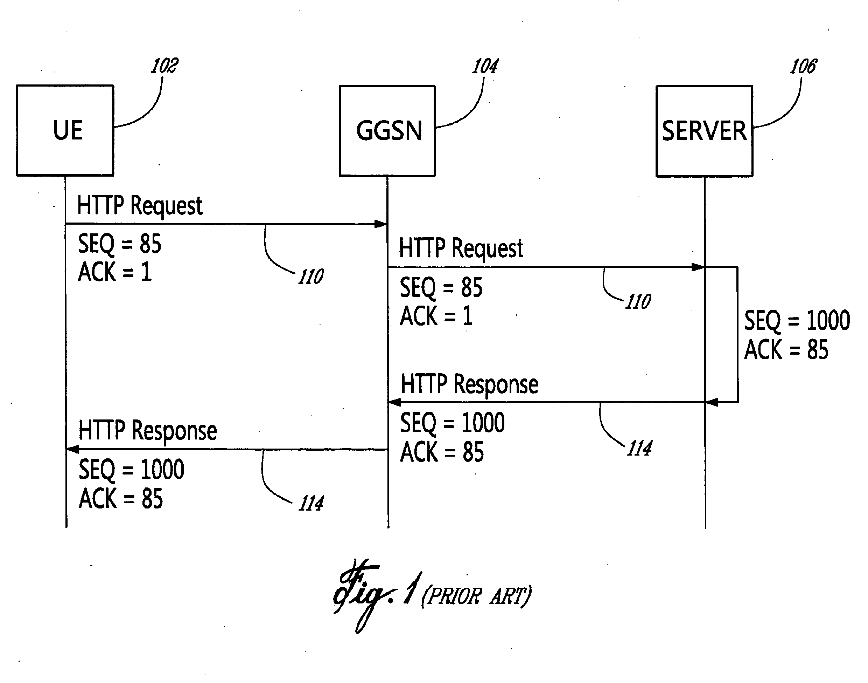

Referring now to Figure 1 (Prior Art), a UE 102 sends an HTTP request message 110. The TCP sequence number (SEQ) is set to 85 and the TCP acknowledge number (ACK) is set to 1. The GGSN 104 receives the HTTP Request 110 and transparently forwards it to the server 106. The server 106 processes the HTTP Request 110 and based on that, a new TCP sequence number is required to be calculated for the response. The TCP SEQ is set to 1000 and the TCP ACK is set to 85, to acknowledge that the server has received all data up to sequence number 85. The server 106 sends HTTP Response 114 to the GGSN 104, which is forwarded to the UE 102.

HTTP header enrichment enables the GGSN to insert HTTP headers into an HTTP request in real time. HTTP header enrichment may be triggered by a packet inspection rule, indicating that information must be added to the header of the HTTP request. The enriched content in the HTTP header will be used by other servers in the network to complete specific operations for the subscriber, i.e. billing, authorization, accounting, etc.

When HTTP header enrichment is employed, the GGSN is no longer able to act fully transparent. When HTTP headers are added to an HTTP request, the packet size will be changed by the addition of the new content to the message. In order to handle the new packet size, the GGSN must adjust the TCP sequence and acknowledgement numbers.

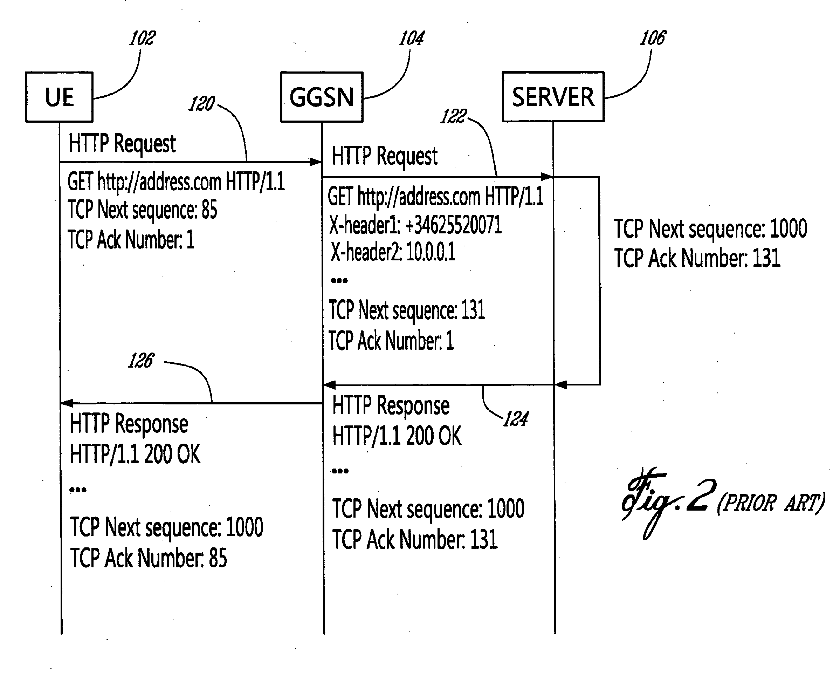

Referring now to Figure 2 (prior art), the UE 102 tries to access http://address.com and sends an HTTP Request 120. The TCP SEQ number is set to 85 and the TCP ACK number is set to 1. The GGSN 104 receives the message and inserts HTTP headers into the HTTP Request 120. A new TCP SEQ number is calculated to be 131 based on the new enriched header and content length. HTTP Request 122, including the added HTTP headers and adjusted TCP SEQ number is sent to the server 106. The server 106 processes the HTTP Request 122 and based on the result, a new TCP SEQ number is calculated. The TCP SEQ is set to 1000 and the TCP ACK is set to 131. HTTP Response 124 is sent from the server 106 to the GGSN 104 and includes the content of http://address.com in its body. Before the HTTP Response can be forwarded to the UE 102, the TCP ACK number must be changed to match the original TCP SEQ number. The GGSN 104 must also recalculate the TCP and IP checksum in order to ensure packet validity at both the sender and the receiver sides.

The GGSN 104 must store this information related to the enriched HTTP session so that it is able to properly adjust the TCP sequence and acknowledgement numbers so as to not break the TCP communication session between the UE 102 and the server 106. The GGSN 104 will store a table or database of this enriched flow information for all active flows. The table may include session identifiers (i.e. source IP address, destination IP address, source port number, destination port number, and protocol) and the corresponding adjustments made to the TCP sequence and/or acknowledgement numbers between the messages sent to the UE 102 and the server 106.

Returning to Figure 2, the GGSN 104 modifies the TCP ACK number of HTTP Response 124, in accordance with the flow information it has previous stored, to match the original TCP SEQ number. As such, the TCP SEQ is set to 1000 and the TCP ACK is changed to 85 from 131. HTTP Response 126 is sent to the UE 102 with these adjustments, and the UE 102 receives the response 126 with an expected ACK value of 85.

Storage of this flow information requires considerable memory and resources on the GGSN. The GGSN is required to keep this information about all the enriched flows while they are active and running traffic. However once these flows are idle for a configured predetermined amount of time, the GGSN can release the occupied memory resources for these idle flows to be used in other operations. The idle time the GGSN waits before deleting the flow information and releasing the resources is called the flow timeout.

Presently, terminating the flow in the GGSN only involves releasing resources in the GGSN. The possibility exists that further TCP messages related to a deleted flow may still originate from a UE or from a web server. When this scenario occurs, the GGSN no longer has the flow information stored to make the required adjustments to the TCP sequence or acknowledge numbers before forwarding the message. This mismatch in the TCP sequence and acknowledgement numbers causes TCP miscommunication between the client and server which can lead to a TCP signaling storm in the network, causing high CPU utilization in the GGSN and a waste of network resources.

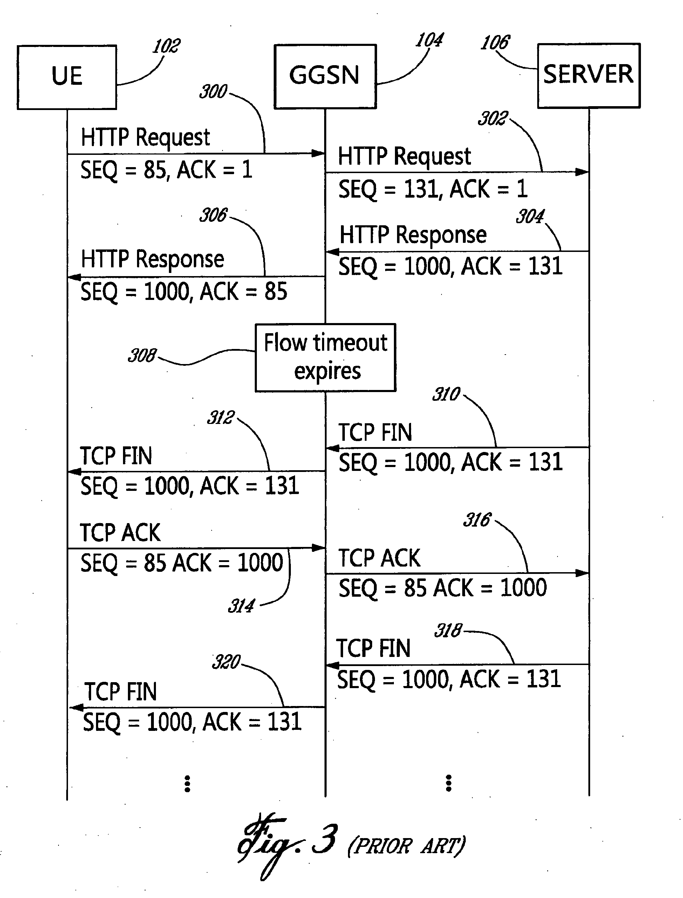

Figure 3 illustrates an example of a TCP signaling storm scenario. HTTP Request 300 is enriched at GGSN 104 and the modified HTTP Request 302 is forwarded to the server 106, in the same manner as Figure 2. Likewise, HTTP Response 304 is adjusted accordingly at the GGSN 104 and forwarded to the UE 102 as HTTP response 306.

At step 308, the flow timeout expires and the flow information and resources are released at the GGSN 104. Some time after the expiration 308, the server 106 attempts to send a TCP FIN message 310, for example, to the UE 102 to teardown the TCP session. Since the flow information has been deleted at the GGSN 104, the GGSN will not make the necessary adjustments to the TCP sequence and acknowledgement numbers that had been previously changed because of the content enrichment procedure. The GGSN 104 will now act transparently and forward TCP FIN 312 to the UE 102 with the same TCP sequence and acknowledgement numbers received from the server 106. The UE 102 does not expect to receive this message. According to its TCP session identifier, the UE 102 expects the TCP acknowledgement number to be 85 not 131. It will then send a TCP ACK message 314 to indicate to the server 106 the expected TCP sequence and acknowledgement numbers, SEQ=85, ACK=1000. The GGSN 104 again simply forwards this message to the server 106, without adjusting the TCP sequence or acknowledgement numbers, as TCP ACK 316. The server 106, in turn, does not expect to receive this message according to the TCP standards and it will send another TCP FIN message 318 to indicate to the UE 102 that it is expecting to receive a TCP ACK number of 131. One skilled in the art will appreciate that message 318 can be a TCP ACK, TCP FIN or TCP FIN-ACK message; TCP FIN will be used for exemplary purposes in this scenario. TCP FIN 318 is handled by the GGSN 104 and UE 102 as described above for TCP FIN 312, and this cycle is repeated endlessly. This signaling ping-pong causes a TCP signaling storm between the UE 102 and the server 106 which may be extremely harmful for the CPU utilization of the GGSN 104 due to the high volume and high rate of messages it needs to process and forward.

At present, there is no mechanism supported by an open standard group in the GPRS core network space, such as the 3GPP Forum, that provides for a content enrichment procedure to avoid this type of TCP signaling storm scenario. When the signaling storm scenario occurs, the cost of GGSN resources required to handle the number of incoming and outgoing messages is extremely expensive.

Accordingly, it should be readily appreciated that in order to overcome the deficiencies and shortcomings of the existing solutions, it would be advantageous to have a solution for preventing TCP signaling storm during content enrichment without impacting the GGSN or the network.

### SUMMARY

It is an object of the present invention to obviate or mitigate at least one disadvantage of the prior art.

In a first aspect of the present invention there is provided a method for terminating a TCP session by a GGSN in a communication network, comprising the steps of receiving a message from a source node addressed to a destination node; modifying the message; storing flow information related to a session associated with the message; forwarding the modified message to the destination node; deleting the stored flow information; and initiating a termination of the session at both the source node and the destination node, in response to deleting the stored flow information.

The step of initiating the termination of the session can include transmitting a terminate message to each of the source node and the destination node to instruct each node to terminate the session. The terminate message can be at least one of a TCP RST and a TCP FIN. Modifying the message can include adding content to the message. Adding content to the message can include adding an HTTP header to the message. The step of modifying the message can include adjusting at least one of a TCP sequence number and a TCP acknowledgement number of the message. The flow information can include a session identifier and adjustment information for at least one of a TCP sequence number and a TCP acknowledgement number. The step of deleting the stored flow information can occur following a predetermined amount of time for which the session is idle. Initiating the termination of the session can be performed in response to observing a mismatch condition. Following the step of initiating a termination of the session, the method can include the steps of observing a mismatch condition; determining an adjustment required for at least one of a TCP sequence number and a TCP acknowledge number; and restoring the flow information in accordance with the required adjustment.

In another aspect of the present invention there is provided a Gateway GPRS Support Node (GGSN) comprising a communication interface for receiving a message from a source node addressed to a destination node; a memory for storing flow information related to a session associated with the received message; and a processor for modifying the received message, for instructing the communication interface to forward the modified message to the destination node, for instructing the memory to delete the stored flow information, and for initiating a termination of the session at both the source node and the destination node in response to the deletion of the stored flow information.

The processor can initiate a termination of the session by instructing the communication interface to transmit a terminate message to each of the source node and the destination node. The terminate message can be at least one of a TCP RST and a TCP FIN. The processor can modify the received message by adding content to the message. The processor can add content to the received message by adding an HTTP header to the message. The processor can modify the received message by adjusting at least one of a TCP sequence number and a TCP acknowledgement number of the received message. The flow information can include a session identifier and adjustment information for at least one of a TCP sequence number and a TCP acknowledgement number. The processor can instruct the memory to delete the stored flow information in response to the session being idle for a predetermined amount of time. The processor can initiate the termination of the session in response to observing a mismatch condition. Following initiating the termination of the session, the processor can observe a mismatch condition; determine an adjustment required for at least one of a TCP sequence number and a TCP acknowledge number; and restore the flow information in the memory in accordance with the required adjustment.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 is a signal flow illustrating a transparent GGSN;
Figure 2 is a signal flow illustrating a header enrichment process;
Figure 3 is a signal flow illustrating a TCP signaling storm scenario;
Figure 4 is a signal flow illustrating a termination of a TCP session;
Figure 5 is a flow chart illustrating a method executed by a GGSN;
Figure 6 is a flow chart illustrating a method executed by a GGSN; and
Figure 7 is a block diagram of an exemplary GGSN.

### DETAILED DESCRIPTION

Reference may be made below to specific elements, numbered in accordance with the attached figures. The discussion below should be taken to be exemplary in nature, and not as limiting of the scope of the present invention. The scope of the present invention is defined in the claims, and should not be considered as limited by the implementation details described below, which as one skilled in the art will appreciate, can be modified by replacing elements with equivalent functional elements.

The present invention is generally directed to a system and method for preventing a TCP signaling storm during content enrichment procedures.

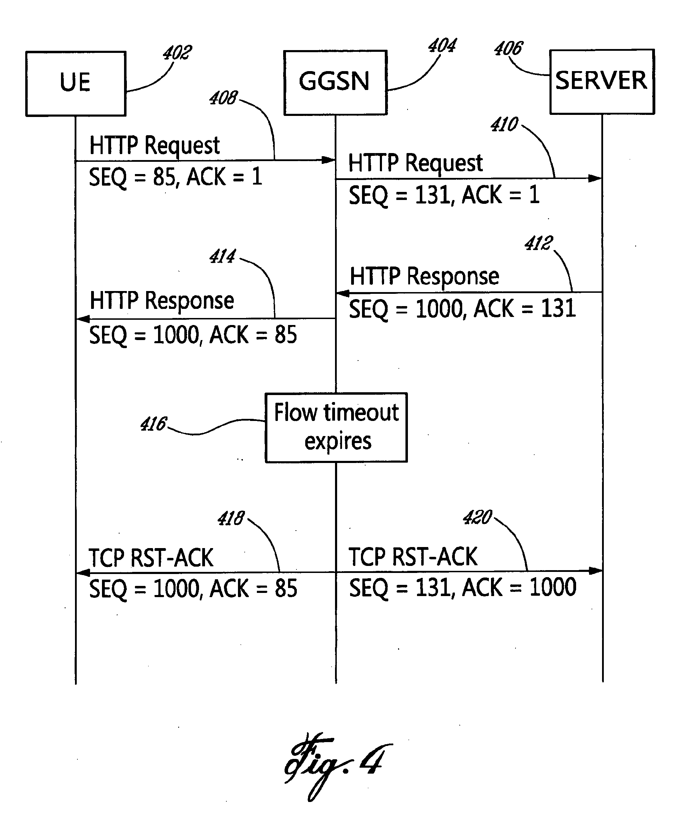

Figure 4 illustrates a signal flow for an exemplary process of the present invention. It will be appreciated that the steps involved in activating a PDP address and initializing a TCP session are not shown in Figure 4 for the sake of simplicity. It can be assumed that a TCP session has been established prior to the signal flow shown in Figure 4.

The UE 402 sends an HTTP Request 408 to access an internet address. The TCP sequence number is set to 85 and the TCP acknowledgement number is set to 1. The GGSN 404 receives the message 408 and inserts HTTP headers into the HTTP Request. A new TCP SEQ is calculated to be 131 based on the new enriched header and content length. HTTP Request 410, including the added HTTP headers and adjusted TCP SEQ is sent to the server 406. As discussed in the prior art, the flow information including the session identifiers and the SEQ and ACK adjustments is stored by the GGSN 404 (this step is not shown in Figure 4). The server 406 processes the HTTP Request 410 and based on the result, a new TCP SEQ number is calculated. The TCP SEQ is set to 1000 and the TCP ACK is set to 131. HTTP Response 412 is sent from the server 406 to the GGSN 404. Before the HTTP Response can be returned to the UE 402, the GGSN 404 accesses the stored flow information in order to change the TCP ACK number to match the original TCP SEQ number. HTTP Response 414 is then sent to the UE 402.

At step 416, the flow timeout expires and the flow information is deleted and resources are released at the GGSN 404. The trigger for the flow timeout expiration can be a predetermined period of time since the flow information was stored, a predetermined amount of time that the session or flow has been idle, a maximum number of different flow informations are stored in memory, or any other operator configured criteria.

In response to the flow timeout 416, the GGSN 404 sends a TCP reset message to the TCP session participants (UE 402 and server 406). TCP RST 418 is sent to the UE 402 with SEQ=1000 and ACK=85. TCP RST 420 is sent to the server 406 with SEQ=131 and ACK=1000. Note that the TCP sequence and acknowledgement numbers are set appropriately for each side of the enriched TCP flow before this flow information is purged from the GGSN 404 entirely. These TCP reset messages indicate that the receiver should delete the indicated connection without any further interaction. The TCP RST messages 418 and 420 reset the TCP connection between the UE 402 and server 406 and no traffic will be communicated on that connection after the TCP RST is received. Any subsequent messages received will be forwarded by the GGSN 404, but discarded by the UE 402 or server 406 as they are not expecting any further communication on the reset TCP connection.

When the GGSN 404 initiates the TCP RST message 420 to the server 406, on behalf of the UE 402, the GGSN 404 can use the IP address of the UE 402 as the source IP address of the message. When the server 406 receives the message 420, it believes the message originated from the UE 402. Similarly, with respect the TCP RST message 418 sent to the UE 402, the GGSN 404 can use the IP address of the server 406 as the source IP address. The TCP checksum for each message will also be recalculated before sending, as previously discussed. The GGSN 404 "fakes" the identities of the TCP session participants during this transaction to teardown the TCP session, without requiring any end-to-end messages being sent.

In an alternative embodiment, a TCP FIN message can be used in lieu of the TCP RST messages 418 and 420 to close the TCP session at both the UE 402 and the server 406. A TCP RST message provides a one-way termination of the session, while a TCP FIN message requires more signaling, as TCP sessions are two-way terminated with this option.

In another alternative embodiment, the GGSN 404 may not immediately send TCP RST messages 418 and 420 following the flow timeout expiration 416. The GGSN 404 can wait to observe the ping-pong condition as explained in the prior art before terminating the TCP session. For example, the GGSN 404 can wait to observe a mismatch of the TCP sequence and acknowledge numbers for a given source/destination IP address and source/destination port number in the messages it receives from the UE 402 and server 406. If this mismatch condition is observed and occurs in a certain number of received messages, the GGSN 404 can then send TCP reset messages 418 and 420 to the UE 402 and server 406, using the information observed in the mismatched messages to fake the identity of the UE 402 on one side and the server 406 on the other side. This alternative embodiment requires some logic and resources in the GGSN 404 to count and store information associated with the received mismatched messages following the flow timeout expiration 416.

In another alternative embodiment, the GGSN 404 can observe a mismatch of the TCP sequence and acknowledge numbers for a given source/destination IP address and source/destination port number in the messages it receives from the UE 402 and server 406, following the termination of the TCP session. If this mismatch condition is observed, the GGSN 404 can determine any adjustments required for the TCP sequence and/or acknowledge numbers, restore the flow information in accordance with the adjustment, and thus restore the content enrichment procedure. This alternative embodiment also requires some logic and resources in the GGSN 404 to count and store information associated with received mismatched messages following the sending of TCP reset messages 418 and 420 to the UE 402 and server 406.

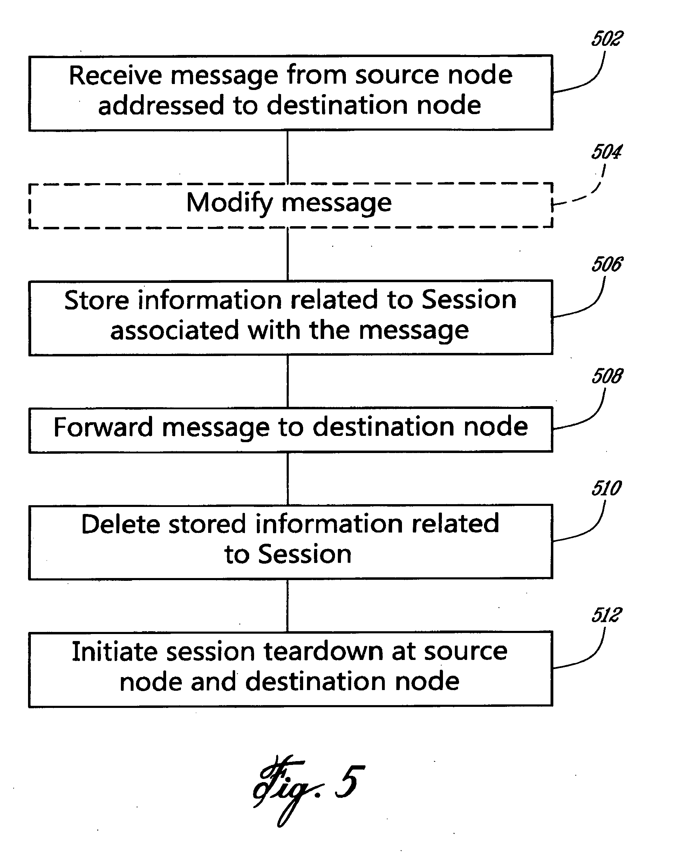

An embodiment of the present invention as implemented by the GGSN 404 in Figure 4 can be further illustrated by the exemplary flow chart of Figure 5. The GGSN receives a message from source node addressed to a destination node in step 502. In step 504, the GGSN can optionally modify the received message. Information related to a session associated with the received message is stored by the GGSN in step 506. Optionally, information associated with modifications made to the message can also be stored at this step. In step 508, the message is forwarded to the destination node. In step 510, the GGSN deletes the information stored related to the session associated with the message. Step 510 can occur following a predetermined period of time. In response to step 510, the GGSN initiates a teardown/termination of the session associated with the message at both the source and the destination nodes in step 512. Step 512 can include sending a session reset or session termination message to both nodes.

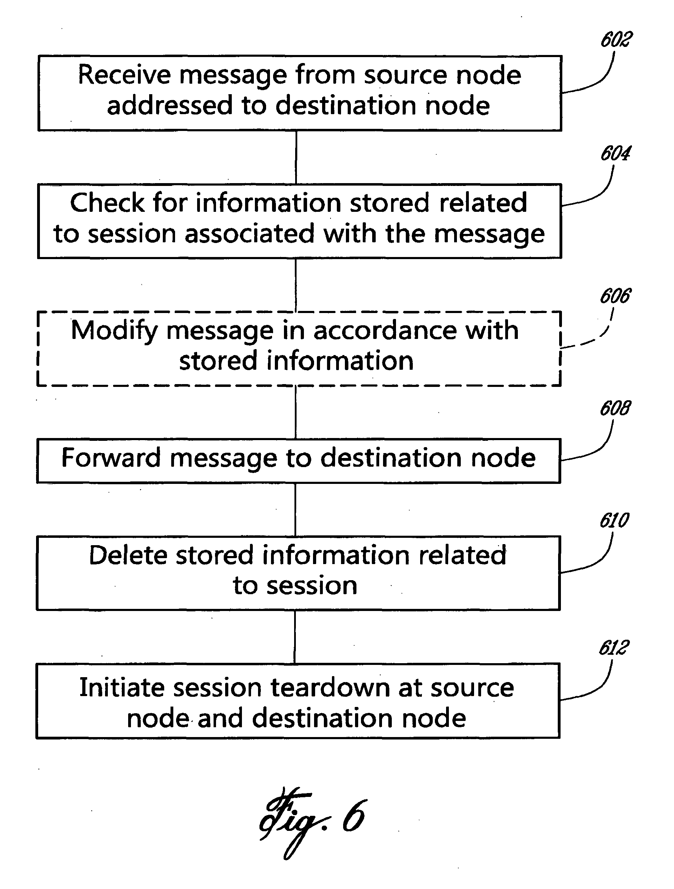

Another embodiment of the present invention as implemented by the GGSN 404 in Figure 4 can be further illustrated by the exemplary flow chart of Figure 6. The GGSN receives a message from source node addressed to a destination node in step 602. In step 604 the GGSN checks for, and retrieves, any information related to a session associated with the message, which has been previously stored in its memory or data repository. Optionally in step 606, the GGSN can modify the received message in accordance with the stored information. The message is forwarded to the destination node in step 608. In step 610, the GGSN deletes the information stored related to the session associated with the message. Step 610 can occur following an expiration of a flow timeout. In response to step 610, the GGSN initiates a teardown/termination of the session associated with the message at both the source and the destination nodes in step 612. Step 612 can include sending a session reset or session termination message to both nodes.

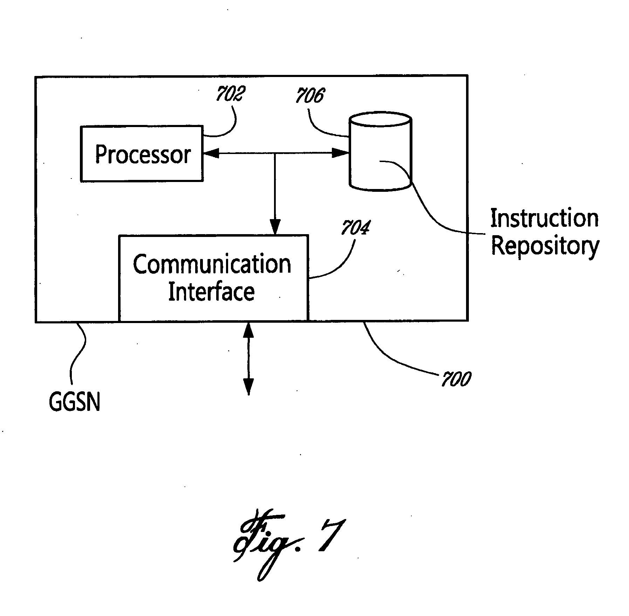

Figure 7 illustrates an exemplary embodiment of a GGSN 700 of the present invention, which can be used to implement any of the various embodiments as described herein. GGSN 700 includes a processor 702, a communication interface 704 and a data repository or memory 706. A message is received at the communication interface 704 from a source node addressed to a destination node. The processor 702 can modify the received message to provide content enrichment or more specifically, HTTP header enrichment. The modification can include adjusting the TCP sequence and acknowledgement numbers of the received message. Flow information related to a session associated with the message, and any modifications made to the message, is stored in the memory 706. The processor 702 instructs the communication interface 704 to forward the modified message to the destination node. The processor 702 subsequently instructs the memory 706 to delete the stored flow information related to the session. The instruction to delete the flow information can be triggered by the expiration of a predetermined period of time, or another factor determined by the GGSN 700. In response to the deletion of the flow information, the processor 702 instructs the communication interface 704 to send session termination messages to both the source node and destination node.

It is not feasible to configure the flow timeout in the GGSN to be a larger amount of time than all of the flow timeouts in the various web servers and UE's around the world. It is also not practical to standardize this flow timeout value between multiple vendors who may be supplying/operating nodes in a single network. It would be extremely expensive from a memory resources perspective to make the GGSN flow timeout larger than all other known flow timeouts. The present invention provides a system and method for preventing the unnecessary flooding of a network with TCP signaling and preventing the overloading of GGSN resources following a flow timeout expiry.

Based upon the foregoing, it should now be apparent to those of ordinary skill in the art that the present invention provides an advantageous solution. Although the system and method of the present invention have been described with particular reference to certain type of messages and nodes, it should be realized upon reference hereto that the innovative teachings contained herein are not necessarily limited thereto and may be implemented advantageously in various manners. It is believed that the operation and construction of the present invention will be apparent from the foregoing description.

Embodiments of the invention may be represented as a software product stored in a non-transitory machine-readable medium (also referred to as a computer-readable medium, a processor-readable medium, or a computer-usable medium having a computer-readable program code embodied therein). The machine-readable medium may be any suitable tangible medium including a magnetic, optical, or electrical storage medium including a diskette, compact disk read only memory (CD-ROM), digital versatile disc read only memory (DVD-ROM), memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

The above-described embodiments of the present invention are intended to be examples only. Alterations, modifications and variations may be effected to the particular embodiments by those skilled in the art without departing from the scope of the invention, which is defined by the claims appended hereto.

## Claims

1. A method for terminating a Transmission Control Protocol, TCP, session by a Gateway GPRS Support Node, GGSN, in a communication network, comprising:
receiving (502) a message from a source node addressed to a destination node;
modifying (504) the message;
storing (506) flow information related to a session associated with the message; and
forwarding (508) the modified message to the destination node,
**characterized in that** the method further comprises:
deleting (510) the stored flow information; and
initiating (512) a termination of the session at both the source node and the destination node, in response to deleting the stored flow information.

2. The method of claim 1, wherein the step of initiating (512) the termination of the session includes transmitting a terminate message (418, 420) to each of the source node and the destination node to instruct each node to terminate the session.

3. The method of claim 2, wherein the terminate message (418, 420) is at least one of a TCP RST and a TCP FIN.

4. The method of any of the preceding claims, wherein the step of modifying (504) the message includes adding content to the message, wherein, preferably, adding content to the message includes adding a Hypertext Transfer Protocol, HTTP, header to the message; and/or wherein the step of modifying (504) the message includes adjusting at least one of a TCP sequence number and a TCP acknowledgement number of the message.

5. The method of any of the preceding claims, wherein the step of deleting (510) the stored flow information occurs following a predetermined amount of time for which the session is idle; and/or
wherein the flow information includes a session identifier and adjustment information for at least one of a TCP sequence number and a TCP acknowledgement number.

6. The method of any of the preceding claims, wherein the step of initiating (512) the termination of the session is performed in response to observing a mismatch condition; and/ or
wherein initiating (512) the termination of the session is performed without the GGSN receiving a request to terminate the session from either of the source node or the destination node.

7. The method of any of the preceding claims, further comprising, following the step of initiating (512) a termination of the session, the steps of:
observing a mismatch condition;
determining an adjustment required for at least one of a TCP sequence number and a TCP acknowledge number; and
restoring the flow information in accordance with the required adjustment.

8. A Gateway GPRS Support Node (700), GGSN, comprising:
a communication interface (704) for receiving a message from a source node addressed to a destination node;
a memory (706) for storing flow information related to a session associated with the received message; and
a processor (702) for modifying the received message and for instructing the communication interface (704) to forward the modified message to the destination node
**characterized in that** the processor (702) is further configured for instructing the memory (706) to delete the stored flow information, and for initiating a termination of the session at both the source node and the destination node in response to the deletion of the stored flow information.

9. The GGSN (700) of claim 8, wherein the processor (702) initiates a termination of the session by instructing the communication interface (704) to transmit a terminate message (418, 420) to each of the source node (402) and the destination node (406).

10. The GGSN (700) of claim 8 or claim 9, wherein the terminate message (418, 420) is at least one of a Transmission Control Protocol, TCP, RST and a TCP FIN.

11. The GGSN (700) of any of claims 8 to 10, wherein the processor (702) modifies the received message (408) by adding content to the message, wherein, preferably, the processor (702) adds content to the received message (408) by adding a Hypertext Transfer Protocol, HTTP, header to the message; and/or
wherein the processor (702) modifies the received message (408) by adjusting at least one of a Transmission Control Protocol, TCP, sequence number and a TCP acknowledgement number of the received message.

12. The GGSN (700) of any of claims 8 to 11, wherein the flow information includes a session identifier and adjustment information for at least one of a Transmission Control Protocol, TCP, sequence number and a TCP acknowledgement number.

13. The GGSN of any of claims 8 to 12, wherein the processor (702) instructs the memory (706) to delete the stored flow information in response to the session being idle for a predetermined amount of time.

14. The GGSN (700) of any of claims 8 to 13, wherein the processor (702) initiates the termination of the session in response to observing a mismatch condition; and/or
wherein the processor (702) initiates the termination of the session without the GGSN receiving a request to terminate the session from either of the source node or the destination node.

15. The GGSN (700) of any of claims 8 to 14, wherein following initiating the termination of the session, the processor (702):
observes a mismatch condition;
determines an adjustment required for at least one of a Transmission Control Protocol, TCP, sequence number and a TCP acknowledge number; and
restores the flow information in the memory in accordance with the required adjustment.

## Patentansprüche

1. Verfahren zum Beenden einer Übertragungssteuerungsprotokoll-, TCP-, Sitzung mittels eines Gateway-GPRS-Unterstützungsknotens, GGSN, in einem Kommunikationsnetzwerk, umfassend:
Empfangen (502) einer Nachricht von einem Quellknoten, die an einen Zielknoten adressiert ist;
Modifizieren (504) der Nachricht;
Speichern (506) von Flussinformationen, die auf eine Sitzung bezogen sind, die der Nachricht zugeordnet ist; und
Weiterleiten (508) der modifizierten Nachricht zu dem Zielknoten,
**dadurch gekennzeichnet, dass** das Verfahren ferner umfasst:
Löschen (510) der gespeicherten Flussinformationen; und
Einleiten (512) einer Beendingung der Sitzung sowohl an dem Quellknoten als auch an dem Zielknoten in Antwort auf das Löschen der gespeicherten Flussinformationen.

2. Verfahren nach Anspruch 1, wobei der Schritt des Einleitens (512) der Beendigung der Sitzung enthält Senden einer Beende-Nachricht (418, 420) an sowohl den Quellknoten als auch den Zielknoten, um jeden Knoten anzuweisen, die Sitzung zu beenden.

3. Verfahren nach Anspruch 2, wobei die Beende-Nachricht (418, 420) ein TCP RST und/oder ein TCP FIN ist.

4. Verfahren nach einem der vorhergehenden Ansprüche, wobei der Schritt des Modifizierens (504) der Nachricht enthält Hinzufügen von Inhalt zu der Nachricht, wobei vorzugsweise das Hinzufügen von Inhalt zu der Nachricht enthält Hinzufügen eines Hyertext-Transfer-Protokoll-, HTTP-, Headers zu der Nachricht; und/oder wobei der Schritt des Modifizierens (504) der Nachricht enthält Anpassen einer TCP-Sequenznummer und/oder einer TCP-Bestätigungsnummer der Nachricht.

5. Verfahren nach einem der vorhergehenden Ansprüche, wobei der Schritt des Löschens (510) der gespeicherten Flussinformationen folgend auf einen vorbestimmten Zeitraum erfolgt, während dessen die Sitzung inaktiv ist; und/oder wobei die Flussinformationen einen Sitzungsidentifikator und Anpassungsinformationen für eine TCP-Sequenznummer und/oder eine TCP-Bestätigungsnummer enthalten.

6. Verfahren nach einem der vorhergehenden Ansprüche, wobei der Schritt des Einleitens (512) der Beendigung der Sitzung in Antwort auf ein Beobachten einer Diskrepanzbedingung durchgeführt wird; und/oder
wobei das Einleiten (512) der Beendigung der Sitzung durchgeführt wird, ohne dass der GGSN eine Anforderung zum Beenden der Sitzung von dem Quellknoten oder dem Zielknoten empfängt.

7. Verfahren nach einem der vorhergehenden Ansprüche, ferner umfassend, folgend auf den Schritt des Einleitens (512) einer Beendigung der Sitzung, die Schritte:
Beobachten einer Diskrepanzbedingung;
Bestimmen einer Anpassung, die für eine TCP-Sequenznummer und/oder eine TCP-Bestätigungsnummer erforderlich ist; und
Wiederherstellen der Flussinformationen gemäß der erforderlichen Anpassung.

8. Gateway-GPRS-Unterstützungsknoten (700), GGSN, umfassend:
eine Kommunikationsschnittstelle (704) zum Empfangen einer Nachricht von einem Quellknoten, die an einen Zielknoten adressiert ist;
einen Speicher (706) zum Speichern von Flussinformationen, die auf eine Sitzung bezogen sind, die der empfangenen Nachricht zugeordnet ist; und
einen Prozessor (702) zum Modifizieren der empfangenen Nachricht und zum Anweisen der Kommunikationsschnittstelle (704), die modifizierte Nachricht zu dem Zielknoten weiterzuleiten,
**dadurch gekennzeichnet, dass** der Prozessor (702) ferner ausgebildet ist zum Anweisen des Speichers (706), die gespeicherten Flussinformationen zu löschen, und zum Einleiten einer Beendigung der Sitzung sowohl an dem Quellknoten als auch an dem Zielknoten in Antwort auf die Löschung der gespeicherten Flussinformationen.

9. GGSN (700) nach Anspruch 8, wobei der Prozessor (702) eine Beendigung der Sitzung einleitet durch Anweisen der Kommunikationsschnittstelle (704), eine Beende-Nachricht (418, 420) an jeden aus dem Quellknoten (402) und dem Zielknoten (406) zu senden.

10. GGSN (700) nach Anspruch 8 oder Anspruch 9, wobei die Beende-Nachricht (418, 420) eine Übertragungssteuerungsprotokoll, TCP, RST und/oder eine TCP FIN ist.

11. GGSN (700) nach einem der Ansprüche 8 bis 10, wobei der Prozessor (702) die empfangene Nachricht (408) modifiziert durch Hinzufügen von Inhalt zu der Nachricht,
wobei vorzugsweise der Prozessor (702) Inhalt zu der empfangenen Nachricht (408) hinzufügt durch Hinzufügen eines Hypertext-Transfer-Protokoll-, HTTP-, Headers zu der Nachricht; und/oder
wobei der Prozessor (702) die empfangene Nachricht (408) modifiziert durch Anpassen einer Übertragungssteuerungsprotokoll-, TCP-, Sequenznummer und/oder einer TCP-Bestätigungsnummer der empfangenen Nachricht.

12. GGSN (700) nach einem der Ansprüche 8 bis 11, wobei die Flussinformationen einen Sitzungsidentifikator und Anpassungsinformationen für eine Übertragungssteuerungsprotokoll-, TCP-, Sequenznummer und/oder eine TCP-Bestätigungsnummer enthalten.

13. GGSN nach einem der Ansprüche 8 bis 12, wobei der Prozessor (702) den Speicher (706) anweist, die gespeicherten Flussinformationen zu löschen, in Antwort darauf, dass die Sitzung für einen vorbestimmten Zeitraum inaktiv ist.

14. GGSN (700) nach einem der Ansprüche 8 bis 13, wobei der Prozessor (702) die Beendigung der Sitzung einleitet in Antwort auf ein Beobachten einer Diskrepanzbedingung; und/oder
wobei der Prozessor (702) die Beendigung der Sitzung einleitet, ohne dass der GGSN eine Anforderung, die Sitzung zu beenden, von dem Quellknoten oder dem Zielknoten empfängt.

15. GGSN (700) nach einem der Ansprüche 8 bis 14, wobei folgend auf das Einleiten der Beendigung der Sitzung der Prozessor (702):
eine Diskrepanzbedingung beobachtet;
eine Anpassung, die für eine Übertragungssteuerungsprotokoll-, TCP-, Sequenznummer und/oder eine TCP-Bestätigungsnummer erforderlich ist, bestimmt; und
die Flussinformationen in dem Speicher gemäß der erforderlichen Anpassung wiederherstellt.

## Revendications

1. Procédé de terminaison d'une session à protocole de contrôle de transmissions, TCP, par un noeud de support du service GPRS de transit, GGSN, dans un réseau de communication, comprenant de :
recevoir (502) un message provenant d'un noeud source adressé à un noeud de destination ;
modifier (504) le message ;
mémoriser (506) de l'information de flux relative à une session associée au message ; et
acheminer (508) le message modifié vers le noeud de destination,
**caractérisé en ce que** le procédé comprend en outre de :
supprimer (510) l'information de flux mémorisée ; et
amorcer (512) une terminaison de la session à la fois au niveau du noeud source et du noeud de destination, en réponse à la suppression de l'information de flux mémorisée.

2. Procédé selon la revendication 1, dans lequel l'étape d'amorce (512) de la terminaison de la session inclut de transmettre un message de terminaison (418,420) à chacun du noeud source et du noeud de destination pour donner instruction à chaque noeud de terminer la session.

3. Procédé selon la revendication 2, dans lequel le message de terminaison (418,420) est au moins un d'un TCP RST et d'un TCP FIN.

4. Procédé selon une quelconque des revendications précédentes, dans lequel l'étape de modification (504) du message inclut d'ajouter du contenu au message, dans lequel, de préférence, l'ajout du contenu au message inclut d'ajouter un en-tête de protocole de transfert hypertexte, HTTP, au message ; et/ou dans lequel l'étape de modification (504) du message inclut d'ajuster au moins un d'un numéro de séquence TCP et d'un numéro d'accusé de réception TCP du message.

5. Procédé selon une quelconque des revendications précédentes, dans lequel l'étape de suppression (510) de l'information de flux mémorisée se produit suivant une période de temps prédéterminée pendant laquelle la session est inactive ; et/ou dans lequel l'information de flux inclut un identifiant de session et une information d'ajustement pour au moins un d'un numéro de séquence TCP et d'un numéro d'accusé de réception TCP.

6. Procédé selon une quelconque des revendications précédentes, dans lequel l'étape d'amorce (512) de la terminaison de la session est effectuée en réponse à l'observation d'une condition de désadaptation ; et/ou dans lequel l'amorce (512) de la terminaison de la session est effectuée sans que le GGSN reçoive une requête pour terminer la session provenant soit du noeud source soit du noeud de destination.

7. Procédé selon une quelconque des revendications précédentes, comprenant en outre, suivant l'étape d'amorce (512) d'une terminaison de la session, les étapes consistant à :
observer une condition de désadaptation ;
déterminer un ajustement requis pour au moins un d'un numéro de séquence TCP et d'un numéro d'accusé de réception TCP ; et
restaurer l'information de flux conformément à l'ajustement requis.

8. Noeud de support du service GPRS de transit (700), GGSN, comprenant :
une interface de communication (704) pour recevoir un message provenant d'un noeud source adressé à un noeud de destination ;
une mémoire (706) pour mémoriser une information de flux relative à une session associée au message reçu ; et
un processeur (702) pour modifier le message reçu et pour donner instruction à l'interface de communication (704) d'acheminer le message modifié vers le noeud de destination ;
**caractérisé en ce que** le processeur (702) est en outre configuré pour donner instruction à la mémoire (706) de supprimer l'information de flux mémorisée et pour amorcer une terminaison de la session à la fois au niveau du noeud source et du noeud de destination en réponse à la suppression de l'information de flux mémorisée.

9. GGSN (700) selon la revendication 8, dans lequel le processeur (702) amorce une terminaison de la session en donnant instruction à l'interface de communication (704) de transmettre un message de terminaison (418,420) vers chacun du noeud source (402) et du noeud de destination (406).

10. GGSN (700) selon la revendication 8 ou la revendication 9, dans lequel le message de terminaison (418,420) est au moins un d'un TCP RST et d'un TCP FIN.

11. GGSN (700) selon une quelconque des revendications 8 à 10, dans lequel le processeur (702) modifie le message reçu (408) en ajoutant du contenu au message, dans lequel, de préférence, le processeur (702) ajoute du contenu au message reçu (408) en ajoutant un en-tête de protocole de transfert hypertexte, HTTP, au message ; et/ou
dans lequel le processeur (702) modifie le message reçu (408) en ajustant au moins un d'un numéro de séquence TCP et d'un numéro d'accusé de réception TCP du message reçu.

12. GGSN (700) selon une quelconque des revendications 8 à 11, dans lequel l'information de flux inclut un identifiant de session et une information d'ajustement pour au moins un d'un numéro de séquence TCP et d'un numéro d'accusé de réception TCP.

13. GGSN selon une quelconque des revendications 8 à 12, dans lequel le processeur (702) donne instruction à la mémoire (706) de supprimer l'information de flux mémorisée en réponse à la session étant inactive pendant une période de temps prédéterminée.

14. GGSN (700) selon une quelconque des revendications 8 à 13, dans lequel le processeur (702) amorce la terminaison de la session en réponse à l'observation d'une condition de désadaptation ; et/ou
dans lequel le processeur (702) amorce la terminaison de la session sans que le GGSN reçoive une requête pour terminer la session provenant soit du noeud source soit du noeud de destination.

15. GGSN (700) selon une quelconque des revendications 8 à 14, dans lequel suivant l'amorce de la terminaison de session, le processeur (702) :
observe une condition de désadaptation ;
détermine un ajustement requis pour au moins un d'un numéro de séquence TCP et d'un numéro d'accusé de réception TCP ; et
restaure l'information de flux dans la mémoire conformément à l'ajustement requis.
